# EUROPEAN PATENT SPECIFICATION

(11) **EP 1 740 428 B1**
(45) Date of publication and mention of the grant of the patent: **28.10.2009**
(21) Application number: 04727669.6
(22) Date of filing: 15.04.2004
(51) Int. Cl.: B60T 8/26, B60T 11/20

(54) **Brake balance device and vehicle braking system with such a device.**
Bremsdruckausgleichsvorrichtung und Bremsanlage mit einer derartigen Vorrichtung.
Dispositif d'équilibrage de pression de freinage et système de freinage comprenant un tel dispositif.

(43) Date of publication of application: 10.01.2007
(73) Proprietor: Freni Brembo S.p.A., 24035 Curno (Bergamo) (IT)
(72) Inventor: CANTONI, Carlo, I-24020 Gorle (IT); OLIVERI DEL CASTILLO, Massimiliano, Giovanni, I-20141 Milano (IT); ARRIGONI, Riccardo, I-20064 Gorgonzola (IT)
(74) Representative: Leihkauf, Steffen Falk
(86) International application number: PCT/IT2004/000212
(87) International publication number: WO 2005/100111

(56) References cited:
- US-A- 1 978 669
- US-A- 2 074 718
- US-A- 2 266 597
- US-A- 3 781 063
- US-A- 3 914 736

## Description

The object of the present invention is a brake balance device and a vehicle braking system.

This invention is particularly suitable to be applied to racing vehicles and more particularly to racing motor vehicles.

Braking systems are known which in a motor vehicle, particularly of the racing type, enable the brake balance between the front wheels and the rear wheels which can be changed by the driver. Prior braking systems comprise a front circuit and a rear circuit and each circuit comprises a master cylinder to be activated by the driver by means of the brake pedal and at least a caliper acting on a disk for each one of the respective wheels. Both front master cylinder and rear master cylinder are activated by the pedal by means of a lever or rocker arm fulcrumed by means of a fulcrum. The length of at least one of both arms is set by the driver by means of a command inside the passenger compartment such that the forces acting on each master cylinder and thus the circuit internal pressures are distributed.

These prior art systems suffer from some drawbacks.

Firstly, the prior art systems cannot allow any adjustment during braking action since the length of the rocker arm cannot be changed while the pedal is being acted on by the driver. Furthermore the prior art systems act by keeping the balance generally constant during braking action.

Furthermore the rocker arm should be mounted behind the brake pedal in an area where the space to house the rocker arm and enable the rotation of the same is very narrow.

In addition to what has been stated above, in order to replace or disassemble the braking circuits master cylinders also the rocker arm should be disassembled thus entailing great complications and a long time for replacement. US 2 266 597 discloses a brake system with one front master cylinder and on rear master cylinder. An equalizing cylinder ensures an equal pressure in the rear and front circuit when they are operating normally without leaks. In case of one circuit becoming inoperative because of a leak, the equalizing cylinder eliminates unsymmetrical braking. US 1 978 669 discloses a fluid brake apparatus with a dual system for the rear and front wheel brake cylinders. The apparatus automatically ensures that the braking effect on the front wheels will be less than that on the rear wheels. US 3 781 063 discloses a double circuit braking system having a pressures reducer in the rear circuit. A control device provides for a by-pass of the pressure reducer in case of a fault in the front circuit. US 3 914 736 discloses a fault detection device for a dual brake system. In a valve assembly it is provided a valve body. When the valve body is fully opened the wheel cylinder oil pressure rises at an equal rate with the master cylinder oil pressure. Otherwise the rate of rise of wheel cylinder oil pressure relative to master cylinder oil pressure decreases.

From what has been stated above, the need arises for a braking system and a respective balance device enabling to change the brake balance between the front wheels and the rear wheels possibly also during braking action and that may be easily mounted onto a vehicle, particularly a racing motor vehicle.

The problem at the heart of the present invention is to provide a vehicle braking system and a balance device having such structural and functional features to meet the above-mentioned respective requirements and overcome the drawbacks cited with reference to the prior art.

This problem is solved by a brake balance device according to claim 1 and by a vehicle braking system according to claim 11.

The additional claims relate to advantageous embodiments either of the braking system or the balance device.

Further characteristics and the advantages of this invention will be understood from the following description of the preferred exemplary embodiments thereof, which are intended to be merely illustrative and non limiting, with reference to the accompanying figures, wherein:

Figure 1 illustrates a schematic view of a vehicle braking system (FRONT/REAR MC = FRONT/REAR MASTER CYLINDER FRONT/REAR CALIPERS);

Figure 2 illustrates a detail of the braking system of figure 1 corresponding to a schematic longitudinal section of a brake balance device according to the present invention;

Figure 3 illustrates a longitudinal sectional view of an embodiment of a brake balance device according to the present invention;

Figure 4 illustrates an enlarged view of detail IV of the brake balance device of figure 3;

Figure 5 illustrates an enlarged view of detail V of the brake balance device of figure 3;

Figure 6 illustrates a diagram corresponding to an exemplary trend of the brake balance value (Brake Balance BB) according to a first condition of use;

Figure 7 illustrates a diagram corresponding to an exemplary trend of the brake balance value (Brake Balance BB) according to a second condition of use.

With reference to the above-mentioned figures, by 10 has been generally indicated a vehicle braking system, particularly of a motor vehicle.

According to a possible embodiment, the braking system 10 comprises disk brakes acting on each of the front and rear wheels. At least one front caliper 12 is conventionally associated to each front wheel and at least one rear caliper 14 is conventionally associated to each rear wheel.

By 16 has been indicated a first braking circuit or front circuit and by 18 has been indicated a second braking circuit or rear circuit.

By front circuit is meant a hydraulic circuit operating by means of a braking fluid and operatively interposed between the brake pedal, not shown, and the front calipers 12. Similarly, by rear circuit is meant a hydraulic circuit operating by means of a braking fluid and operatively interposed between the brake pedal, now shown, and the rear calipers 14.

In the following, by first or front will be indicated a member belonging to the first circuit or front circuit. Similarly, by second or rear will be indicated a member belonging to the second circuit or rear circuit.

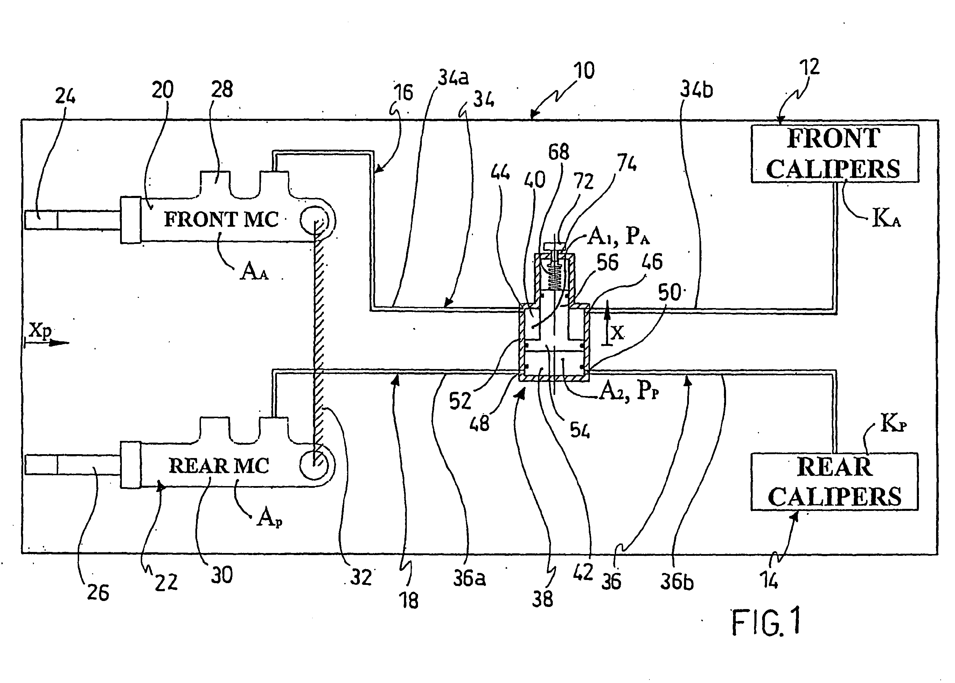

Each braking circuit comprises a respective master cylinder. In the example illustrated in figure 1, a first master cylinder or front master cylinder has been indicated with numeral 20 while a second master cylinder or rear master cylinder has been indicated with numeral 22.

Each master cylinder comprises a respective rod suitable to be connected to the brake pedal of the vehicle inside the passenger compartment. By 24 has been indicated a rod associated to the front master cylinder 20 and by 26 has been indicated a rod associated to the rear master cylinder 22. In particular, both rods are suitable to be tightly fixed to the pedal. Though the brake pedal has not been illustrated, the displacement imparted to both rods by the pedal inside the passenger compartment has been indicated with Xp in Figure 1.

A cylinder of the front master cylinder has been indicated with 28 and a cylinder of the rear master cylinder has been indicated with 30. Both cylinders 28 and 30 are suitable to be advantageously mounted directly onto a frame 32 of the vehicle.

A piston, not shown, is associated to each rod 24, 26, respectively, which is suitable to be housed in the respective cylinder 28, 30. The front piston area has been indicated with Aa and the rear piston area has been indicated with Ap. According to a possible embodiment, the front piston area Aa is smaller than the rear piston area Ap.

Each circuit comprises first conduits or front conduits 34 and second conduits or rear conduits 36. Inside a circuit, the conduits connect the master cylinder to the respective calipers.

A brake balance device between the front wheels and the rear wheels belonging to the brake system 10A has been indicated with 38. The balance device 38 is advantageously interposed along the respective front and rear circuits. Particularly, the balance device 38 is fitted along the respective conduits and divides them into a first portion 34a, 36a from the master cylinder to the balance device and a second portion 34b, 36b between the balance device and the calipers.

In accordance with a possible embodiment, both the front circuit and the rear circuit run through the balance device 38 while remaining structurally and fluidically separated.

According to the invention, the balance device 38 defines a first chamber 40 and a second chamber 42 which respectively define volumes that may be varied as a function of the adjustment set by the driver and/or the pressure applied to the system by means of the brake pedal (i.e. as a function of the displacement Xp of the pedal). Particularly, the first chamber 40 and the second chamber 42 define volumes which may be mutually and inversely varied, i.e. such that any increase in the first chamber volume corresponds to a decrease in the second chamber volume and vice versa.

In accordance with a possible embodiment, the first chamber 40 is interposed along the first circuit or front circuit and the second chamber 42 is interposed along the second circuit or rear circuit. In other words, the first chamber 40 comprises an inlet 44 where the first portion 34a of the front circuit and an outlet 46 communicating with the second portion 34b of the front circuit end. Similarly, the second chamber 42 comprises an inlet 48 where the first portion 36a of the rear conduit and an outlet 50 communicating with the second portion 36b of the rear circuit end.

Yet in other words, the first chamber 40 communicates with the front master cylinder 20 through the inlet 44 and with the front calipers 12 through the outlet 46. Similarly, the second chamber 42 communicates with the rear master cylinder 22 through the inlet 48 and with the rear calipers 14 through the outlet 50.

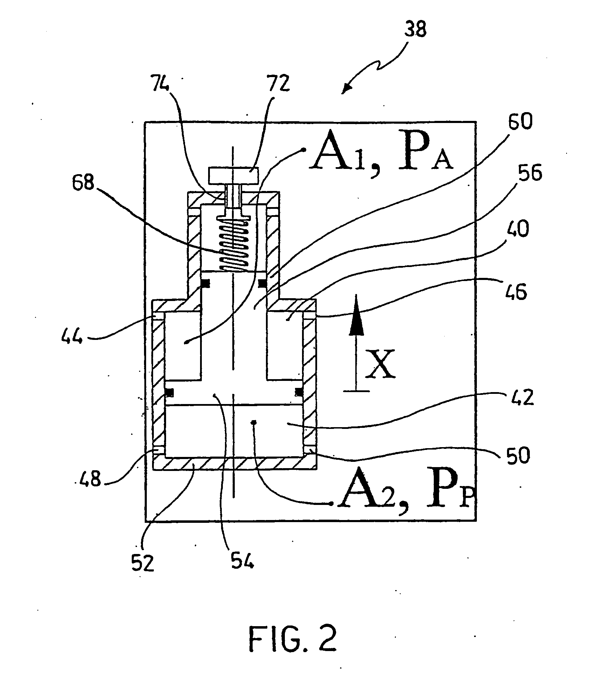

In accordance with the invention, the balance device 38 comprises a cylinder 52 housing a piston 54. The piston 54 partitions the cylinder 52 defining the first chamber 40 and the second chamber 42 and represents a movable wall for both chambers suitable to mutually and inversely change the volume as defined by each chamber. In fact, a displacement X of piston 54 within the cylinder 52 increases the volume in one of the chambers and at the same time decreases the volume in the other one as will be discussed below. For example, a displacement X in the direction indicated in figure 1 and 2 will increase the volume in the second chamber 42 and decrease the volume in the first chamber 40.

In accordance with a possible embodiment, with A1 has been indicated the piston area 54 inwardly facing the first chamber 40 and with A2 has been indicated the piston area 54 inwardly facing the second chamber 42. With reference to figure 1 and 2, with Pa has been indicated the pressure within the front circuit and with Pp the pressure within the rear circuit.

In accordance with the invention, the piston comprises a rod 56 extending across the first chamber starting from the area A1. In other words the area A1 of the first chamber 40 is smaller than the area A2 of the second one 42.

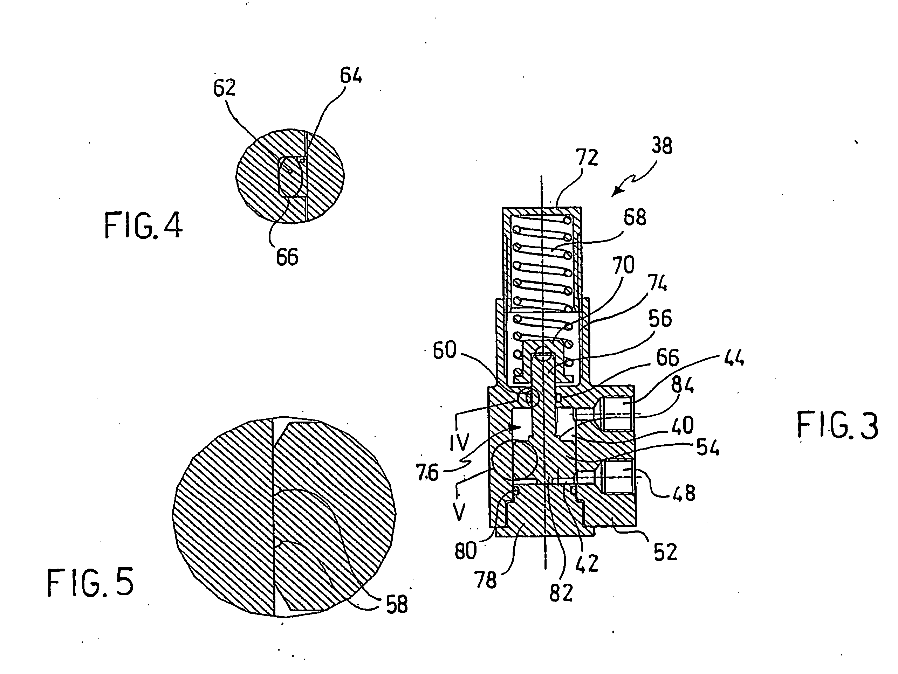

In accordance with a possible embodiment, between the piston 54 and the cylinder inner walls a seal is made which is suitable to keep both circuits separated and is further suitable to minimize the friction between the piston and the cylinder walls. Advantageously a metal/metal seal with a labyrinth made by grooves 58 formed on the surface of the piston 54 is provided (figure 5).

Advantageously, the rod 56 extends outwards from the first chamber 40 through an aperture 60 formed in a wall of the cylinder 52. In accordance with a possible embodiment, a seal is provided between the rod 56 and the walls of the aperture 60 of the cylinder, which is also suitable to minimize the friction between the piston and the cylinder walls. Advantageously a seal made of composite material is provided, which comprises a rubber ring or Oring 62 and a pad 64 of a polymeric material with low static and dynamic friction values, such as Teflon (registered mark). The rubber ring and the pad are housed in a seat 66 formed in the wall defining the aperture 60 such that the rubber ring holds the pad in contact with the rod (figure 4).

The balance device 38 comprises adjusting means such as suitable to be operated by the driver while driving to change the brake balance level between the front wheels and the rear wheels.

According to the invention, the adjusting means comprises a spring 68 acting on the piston 54 such as through the rod 56. In accordance with a possible embodiment, the spring 68 has one end which is fitted onto the rod 56, preferably by means of a cap 70, and one end which is responsive against an adjusting screw 72 tightened in a threaded seat 74 of the cylinder 52. Advantageously the adjusting screw 72 is made in form of a receptacle which is suitable to receive a spring portion therein and threaded on the outside to be either screwed or unscrewed within the threaded seat 74 (figure 3).

Figures 1 and 2 are schematic views of the balance device 38 while figure 3 is a cross-sectional view of the balance device 38 in accordance with a possible embodiment. Figure 3 shows the cylinder 52 defining therein a compartment 76 housing piston 54 which is open on one side thereof. A cover 78 is advantageously mounted on the open end of the compartment 76, preferably screwed up, with a gasket 80 therebetween.

Figure 3 shows inlet 44 of first chamber 40 and inlet 48 of second chamber 42. The respective outlets are not seen in the section of figure 3.

In accordance with a possible embodiment such as illustrated in figure 3, piton 54 comprises a protrusion 82 extending from area A2, i.e. within the second chamber 42, preferably in the middle of the piston. In the position in Figure 3, i.e. when the second chamber has the lowest volume, the protrusion 82 is suitable to touch the cylinder bottom (e.g. the cover 78) such that the second chamber 42 is defined by the annular area around the same protrusion. In other words, the protrusion 82 is suitable to keep a lowest volume in the second chamber which is other than zero. The position of inlet 48 (and outlet 50) is such to ensure fluid communication between the rear conduits 36 and the second chamber 42 also when the latter has the lowest volume.

In accordance with a possible embodiment such as illustrated in figure 3, the piston 54 comprises a shoulder 84 extending from area A1, i.e. within the first chamber 40, preferably in the middle of the piston. Particularly, shoulder 84 defines an enlargement of the rod bottom 56. In a position where the first chamber has the lowest volume, shoulder 84 is suitable to touch the respective cylinder bottom such that the first chamber 40 is defined by the annular area around the same shoulder. In other words, the shoulder 84 is suitable to keep a lowest volume in the first chamber which is other than zero. The position of inlet 44 (and outlet 46) is such to ensure fluid communication between the front conduits 34 and the first chamber 40 also when the latter has the lowest volume.

The assembly of the balance device according to the present invention as well as the mounting of the same on the respective braking system within the vehicle are described below.

With reference to an embodiment such as illustrated in figure 3, piston 54 is fitted into the cylinder through the aperture provided on one end thereof where the cover 78 is subsequently screwed up. The seals relative to the piston, rod and cover are positioned while assembling piston 54.

Spring 68, selected according to its stiffness K, and cap 70, if present, are fitted onto the rod extending outwards from first chamber 40. The adjusting screw 72 is tightened in its seat 74.

Finally, the balance device is assembled in the braking system by connecting the respective conduits to inlets 44, 48 and outlets 46, 50 of both chambers defined by the piston.

In accordance with a possible embodiment, the adjusting screw 72 is directly operable by the driver while according to an advantageous embodiment, not shown, remote control means of the adjusting screw 72 are provided which operate between the passenger compartment and the same adjusting screw. For example, these remote control means may comprise a Boden-type cable or similar.

The description of the operation of a braking system and a brake balance device used therewith is given below.

In the description of the operation of both system and device as described above reference will be made to the brake balance value (Brake Balance BB) intended as a percentage indicating the braking at the front circuit relative to the total amount of this indicative value at the front and rear calipers. Generally, as the indicative braking value, reference is made to the pressure applied by the braking fluid in the respective circuit, hence the balance value results from the ratio: Pa/(Pa + Pp).

With reference to Figure 1, when the driver acts on the brake pedal the rods of the front and rear master cylinders are pushed inside the respective cylinders thus causing a stroke Xp of the corresponding pistons. The stroke is the same for both master cylinders. This stroke corresponds to a volume of brake fluid that is "displaced" and that generates a braking pressure in the circuit.

The circuit feature, i.e. curve P(V) indicating the pressure as a function of the displaced-liquid volume is such that a greater displaced-liquid volume corresponds to a greater pressure.

The displaced-liquid volume, and also the braking pressure change, stroke Xp being equal, as a function of the diameter of the pistons of the front and rear master cylinders.

Starting from the fact that the stroke Xp is the same for both master cylinder pistons, and considering the case where both maser cylinder diameters and circuit features P(V) are the same, without the balance device 38 the front circuit and the rear circuit are able to apply substantially the same braking pressure and so the brake balance value (Brake Balance BB) amounts to 50%.

According to a possible embodiment where the area Aa of the front master cylinder piston is less than the area Ap of the rear master cylinder piston, without the balance device 38 and considering the circuit features as being the same, the displaced-fluid volume in the front circuit is less than the displaced-fluid volume in the rear circuit, and accordingly the front braking pressure Pa is less than the rear one Pp. There results that the brake balance value (Brake Balance BB) is less than 50%. This value is practically constant upon increase of Xp i.e. upon increase of the braking pressure on the front wheels (except those variations due to conduit absorption) and is calculated considering the ratio of Aa and the sum of both master cylinder piston areas (Aa + Ap).

With the balance device according to the present invention, the braking fluid volume is to be considered, which in the rest condition, fills the first and second chambers and which, by acting on the brake pedal, is "withdrawn" or "supplied" to the calipers as a function of how both chamber volumes mutually change.

Generally, a relative increase in the second chamber volume causes a decrease in the braking pressure Pp on the rear wheels and a relative increase of the brake balance value (Brake Balance BB), and vice versa.

In the case where a balance device such as described in the annexed figures, different conditions may take place as a function of the preloading Xo set on spring 68, as will be discussed below.

In the case where the spring has a zero preloading Xo, brake balance value (Brake Balance BB) will substantially depend on the variation of the first and second chamber volumes, i.e. on the areas A1 and A2 of the balance device , as well as the areas Aa and Ap of both master cylinders. Upon increase of the pressures within the circuits piston 54 presses the spring initially by a zero preloading thus reaching a balance state. This brake balance value (Brake Balance BB) is substantially constant upon variation of the applied pressure, e.g. upon increase in pressure Pa within the front circuit.

When the balance device is assembled in the vehicle braking system and is at rest (Xp=0), the device takes up a configuration similar to that illustrated with reference to the embodiment in Figure 3, i.e. wherein the braking fluid volume is maximum in the first chamber and the braking fluid volume is minimum in the second chamber. If a change is considered starting from the state of rest, if the second chamber volume is increased, the first chamber volume will be decreased accordingly. A part of the rear circuit braking fluid fills the second chamber instead of being active on the rear calipers to create a braking pressure. On the contrary, a part of the braking fluid that filled the first chamber is provided to the front calipers to create a greater braking pressure. Therefore, the braking percentage increases at the front wheels and decreases at the rear ones, and the brake balance value (Brake Balance BB) will increase accordingly up to more than 50% as a function of the volumes in question, e.g. as a function of the sizes of both areas A1 and A2 of piston 54 and areas Aa and Ap of both master cylinders.

In the case where area A2 facing the second chamber is greater than area A1 facing the first chamber, starting from a state of rest and creating a stroke Xp of both master cylinder pistons, piston 54 of the balance device is forced by pressure into the rear circuit Pp in the direction of displacement X in Figure 1, thereby second chamber 42 increases its volume to the detriment of first chamber 40. Accordingly, contrarily to a condition where the balance device is not provided, the braking pressure on the front wheels Pa as well as the brake balance value (Brake Balance BB) are increased up to a value that may exceed 50% as a function of areas A1 and A2 and areas Aa and Ap of both master cylinders as discussed above.

If the preloading of the spring is increased, e.g. by means of the adjusting screw, with the same amount of displacement Xp than the above condition (i.e. with the same pressure for example in front circuit Pa), the increase in second chamber 42 will be reduced starting from the value with zero preloading substantially resulting from the value of areas A1 and A2 of the balance device (and areas Aa and Ap of both master cylinders) until reaching the value that will be obtained in case the balance device is not provided.

The volume in the second chamber will increase when the force applied onto piston 54 following the pressure in the rear circuit Pp exceeds the force applied onto piston 54 following the pressure in the front circuit Pa and following the preloading of the spring. Before the volume in the second chamber is increased, the system will behave like the balance device were not provided.

If the preloading of the spring is increased, the front pressure Pa range will be increased, wherein the system will behave like the balance device is not provided. In fact, by increasing the preload, piston 54 of the balance device will be pressed against the cylinder bottom while keeping the volume in the second chamber at the minimum, until pressure in the second chamber exceeds a threshold value which depends on both the preloading of the spring and areas A1 and A2 as well as areas Aa and Ap of the master cylinders.

When the pressure value is such to allow an increase in the second chamber volume, the spring will be pressed. Upon increase in the pressures in question, i.e. upon increase of Xp, piston 54 will keep on move in the displacement direction X illustrated in Figure 1 thus further pressing the spring as a result of the difference between both areas A1 and A2, between both areas Aa and Ap of the master cylinders and between the pressure values of both chambers 40, 42. Thus, once a certain preloading of the spring has been set, after a certain threshold value of front pressure Pa has been exceeded, the balance device intervenes (piston 54 moves according to the direction X in Figure 1) and an increase in the value of brake balance (Brake Balance BB) is automatically obtained upon pressure increase in the front circuit Pa, preferably starting from a value lower than 50% to a value greater than 50% upon pressure increase in the front circuit, i.e. upon increase of Xp.

In this way, a first braking step is carried out with greater pressure at the rear wheels while a second braking step, when the front side tends to be more loaded by inertia, is carried out with pressure prevailing on the front wheels.

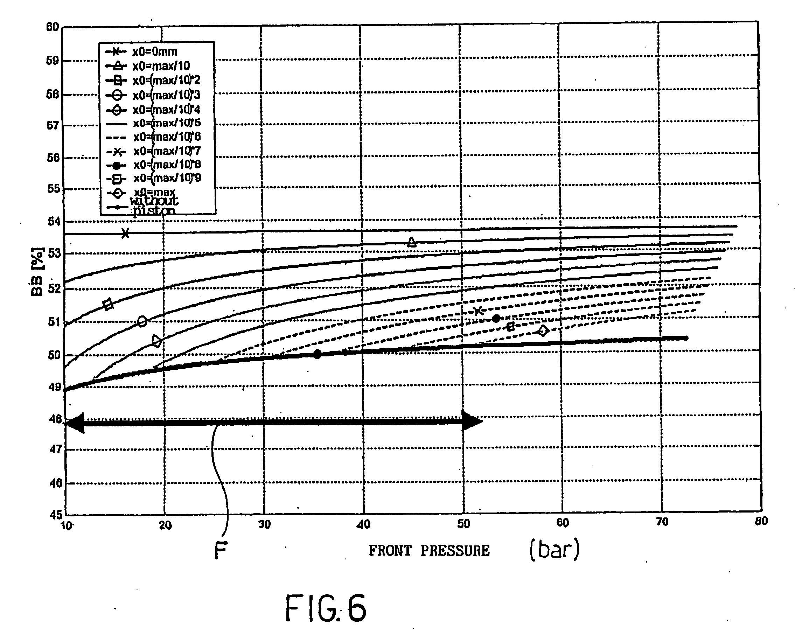

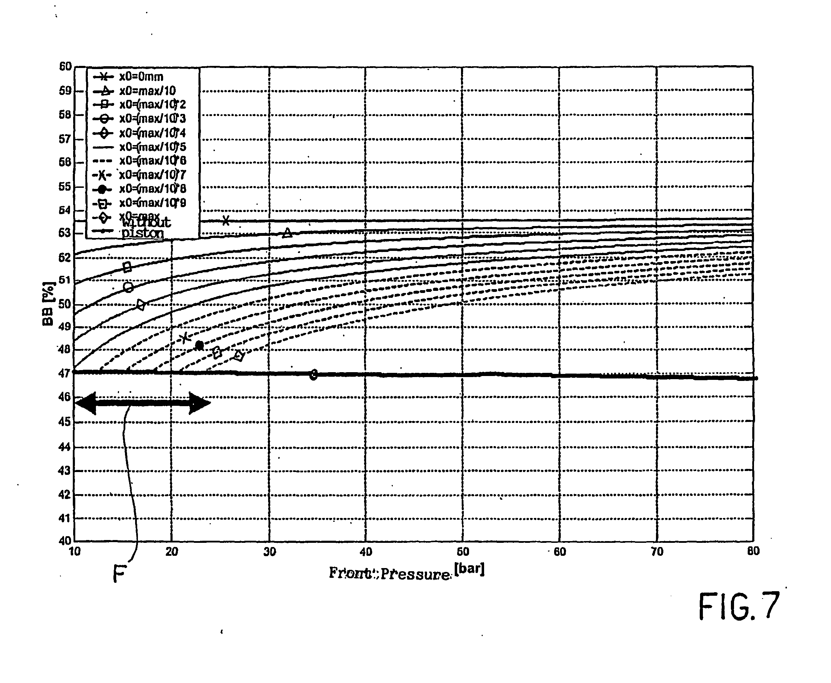

Figures 6 and 7 illustrate two diagrams relative to the theoretical operation of a particular exemplary embodiment in which the above general operation can be identified. Both figures illustrate the brake balance value (Brake Balance BB) as a function of front pressure Pa both with the balance device and without the balance device as a function of the preloading of the spring.
Figure 6 is relative to a condition where the influence of the volume absorbed by the pipes has been considered while Figure 7 is relative to a condition where both lines have been considered as being rigid, in order to either minimize or cancel the action of pipes. The actual system relevant to this example behaves intermediate to that illustrated in Figures 6 and 7.

The particular example relates to a braking system wherein:

The area diameter Aa of the piston of front master cylinder 20 is 17 mm and the master cylinder is single-stage,

The area diameter Ap of the rear master cylinder piston 22 is 18 mm and the master cylinder is single-stage,

The maximum stroke of the piston of master cylinders Xpmax is 30 mm,

The maximum stroke of the balance device piston has been sized such that the maximum losable volume within the chamber delimited by area A2 is 20% of the volume container in the smallest master cylinder used and the percentage of "losable" stroke is 20%,

Spring rigidity K is 10000 N/m and the max. preloading is Xo=max=15 mm,

The front circuit absorption KA is 1 mm³/bar (linearly calculated from 0-50 bar on the circuit and by adding the calipers absorption, normalized with respect to the front circuit),

The rear circuit absorption KP is 1,13 mm³/bar (linearly calculated from 0-50 bar on the circuit and by adding the calipers absorption, normalized with respect to the front circuit),

The diameter D1 (equal to the piston 54 diameter to which the rod diameter has been subtracted) is 15 mm, hence A1 is 3,14 * (D1)²/4,

The diameter D2 is 16.2 mm hence A2 is 3,14 * (D2)²/4,

The maximum stroke of piston 54 is 6.6 mm.

With reference to Figure 7, value BB provided by the master cylinders is 47,1% while value BB provided by the areas of the balance device is 53,8% (which value corresponds to the presence of the balance device without spring preloading). The value BB changes within these extremes as a function of both the spring preloading and the front pressure.

Starting from the zero preloading curve and increasing the spring preloading, the curve lowers and takes an arcuate trend starting from a value that, from Pa=10 bar, is slightly greater than 52% up to 53,8% upon front pressure increase. If the preloading is further increased, the value BB as being Pa=10 bar will be further decreased starting from about 49,5% and asymptotically increased to 53,8% upon front pressure increase.

If the preloading is further increased, a front pressure range is defined wherein the system behaves in the same way as the one which is not provided with the balance device. This range is illustrated both in Figure 6 and in Figure 7 by the arrow F. Particularly, with the highest preloading, the BB curve will keep to 47% until it reaches a front pressure value of about 24 bar, then it will increase together with front pressure. Generally, front pressure values are about 70 bar, thereby at the highest value of Xp and highest value of the preloading, BB stabilizes around 51%. In other words, starting from a certain preloading value, the braking action starts from such a balance to brake mostly on rear wheels, and upon increase of Xp and accordingly of front pressure Pa, it balances to be then balanced such as to brake mostly on front wheels.

The diagram in Figure 6 is of a similar concept to Figure 7 but, following absorption by the tubes, the value BB at p=10 bar changes from 49% to 53,8% and the front pressure range F where the system behaves like it were not provided with the balance device is greater (0-50 bar). In other words, once the areas A1 and A2 and the spring rigidity K have been set, the selection of the preloading range to be applied to the spring in order to change the point where the balance device may intervene merely depends on the system absorption.

In accordance with the present invention, a vehicle braking method is advantageously provided, comprising a step wherein strokes Xp are determined which are equal to respective pistons of a front master cylinder and a rear master cylinder of a vehicle, in order to obtain a greater pressure in the circuit comprising the master cylinder with the piston of the greatest area. In accordance with a possible embodiment, front master cylinder 20 of the vehicle has a piston of smaller area than the piston of the rear master cylinder 22.

Advantageously, a balance step of braking fluid volume is mutually and inversely provided between the front circuit and the rear circuit in order to change the value of brake balance between the front wheels and the rear wheels. In accordance with a possible embodiment, the balance of braking fluid volumes depends on the pressure within the circuits, particularly in the front circuit Pa.

Advantageously, a volume associated to the rear circuit will increase upon increase in the circuit pressure to change the balance value during braking action. Particularly, the volume associated to the rear circuit will increase upon increase in the circuit pressure in order to change the balance value during braking action starting from a condition in which the pressure in the rear circuit is greater to one in which the pressure in the front circuit is greater.

It should be appreciated from what stated above that the balance device and a braking system in accordance with the present invention enable to optimize braking by suitably selecting the desired balance value. Furthermore, this value can be changed by the driver and is set such as to be automatically changed in the course of braking action, for example starting from a value less than 50% up to a value greater than 50% to exploit a greater pressure on the rear wheels during a first step of the braking action and subsequently a greater pressure on the front wheels during a second step of the braking action.

The adjusting screw allows the driver to change point where the balance device may intervene and the balance values.

The provision of two circuits which are separate though being mutually affectable allows to obtain high safety conditions in case of any failure of a member of either circuit. In the event of failure of a rear circuit member, the front master cylinder will be immediately able to carry out an emergency braking action on the front wheels. In the event of failure of a front circuit member, the rear master cylinder is able to carry out an emergency braking action on the rear wheels as soon as the second chamber has reached its highest volume.

It is understood that variants and/or additions may be made to what has been discussed and illustrated above.

To the preferred embodiment discussed above, those skilled in the art, aiming at satisfying particular requirements, may carry out a number of variations, adaptations and replacements of members with others which are operatively equivalent, without however departing from the scope of the following claims.

## Claims

1. Brake balance device (38) for a braking system (10) of a vehicle to change the brake balance between at least one front wheel and at least one rear wheel of the vehicle, said braking system (10) comprising a front circuit (16) and a rear circuit (18) and said balance device (38) comprising:
- a first and a second chamber (40, 42) which are suitable to be interposed along the front circuit (16) and the rear circuit (18) of the braking system (10), respectively, said chambers defining volumes which may change as a function of the rear circuit pressure (Pp);
- a cylinder (52) and a floating piston (54) defining a movable wall of said first and second chambers (40, 42); and
- a spring (68), arranged from the side of the first chamber (40), suitable to apply a force onto the floating piston (54) as directed from first to second chamber;
**characterized in that** said floating piston (54) comprises a rod (56) extending across the first chamber (40) and said brake balance device (38) includes an adjusting screw (72) which is suitable to change the preloading of the spring (68) to change the value of rear pressure (Pp) at which the balance device will intervene, said spring (68) being fitted between the adjusting screw (72) and the rod (56).

2. Brake balance device (38) according to claim 1, wherein said volumes may mutually and inversely change as a function of the rear circuit pressure (Pp).

3. Brake balance device (38) according to claim 1 or 2, suitable to be interposed along the respective front and rear circuits of the braking system, the front circuit pressure (Pa) without balance device being smaller than the rear circuit pressure (Pp), said balance device increasing the front pressure (Pa) with respect to the rear pressure (Pp) upon increase in the rear circuit pressure (Pp).

4. Brake balance device (38) according to one of previous claims, wherein the volume in the second chamber (42) is increased upon increase of pressure (Pp) within the rear circuit and the volume in the first chamber (40) is mutually decreased upon increase of pressure (Pp) in the rear circuit, thus changing the value of brake balance during the braking action.

5. Brake balance device (38) according to claim 1, wherein the area (A2) of piston (54) facing the second chamber (42) is greater than the area (A1) of piston (54) facing the first chamber (40).

6. Brake balance device (38) according to one of previous claims, wherein said adjusting screw (72) defines a receptacle suitable to house the spring (68) at least partially therein and to be externally screwed in a threaded seat (74) of the cylinder (52).

7. Brake balance device (38) according to claim 6, wherein a labyrinth seal is provided between said piston (54) and said cylinder (52) which comprises grooves (58) formed on the surface of the piston (54).

8. Brake balance device (38) according to one of previous claims 6 or 7, comprising a seal provided with a rubber ring (62) and a pad (64) in a material with low static and dynamic friction values positioned in contact with a wall of a rod (56) of the piston (54).

9. Brake balance device (38) according to one of previous claims 6 to 8, wherein said piston comprises a protrusion (82) suitable to keep a lowest volume in the second chamber (42).

10. Brake balance device (38) according to one of previous claims 6 to 9, wherein said piston comprises a shoulder (84) suitable to keep a lowest volume in the first chamber (40).

11. Braking system (10) of a vehicle comprising a brake balance device (38) between at least one front circuit (16) and at least one rear circuit (18) of the vehicle in accordance with one of previous claims.

12. Braking system (10) of a vehicle according to claim 11, wherein said first chamber (40) is interposed along said front circuit (16) and said second chamber (42) is interposed along said rear circuit (18).

13. Braking system (10) of a vehicle according to claims 11 or 12, wherein said front circuit (16) comprises a front master cylinder (20) and said rear circuit (18) comprises a rear master cylinder (22), said master cylinders being connected to a brake pedal such that the stroke (Xp) of respective pistons is the same.

14. Braking system (10) of a vehicle according to claim 13, wherein said master cylinders (20, 22) comprise respective rods (24, 26) which are rigidly connected to the brake pedal.

15. Braking system (10) of a vehicle according to claims 13 or 14, wherein the piston of front master cylinder (20) has a smaller area (Aa) than the area (Ap) of the piston of rear master cylinder (22).

16. Braking system (10) of a vehicle according to one of claims 13 to 15, wherein said front and rear master cylinders (20, 22) comprise respective cylinders (28, 30) secured to a frame (32) of the vehicle.

## Patentansprüche

1. Bremsgleichgewichtsvorrichtung (38) für ein Bremssystem (10) eines Fahrzeugs zum Ändern des Bremsgleichgewichts zwischen zumindest einem Vorderrad und zumindest einem Hinterrad des Fahrzeugs, wobei das Bremssystem (10) eine vordere Schaltung (16) und eine hintere Schaltung (18) umfasst, und die Gleichgewichtsvorrichtung (38) folgende Merkmale umfasst:
- eine erste und eine zweite Kammer (40, 42), die geeignet sind, um jeweils entlang der vorderen Schaltung (16) und der hinteren Schaltung (18) des Bremssystems (10) eingefügt zu werden, wobei die Kammern Volumen definieren, die sich als eine Funktion des Drucks (Pp) der hinteren Schaltung ändern können;
- einen Zylinder (52) und einen Gleitkolben (54), die eine bewegliche Wand der ersten und der zweiten Kammer (40, 42) definieren; und
- eine Feder (68), die seitlich von der ersten Kammer (40) angeordnet ist, die zum Anlegen einer Kraft an den Gleitkolben (54) geeignet ist, wenn derselbe von der ersten zu der zweiten Kammer gerichtet ist;
**dadurch gekennzeichnet, dass** der Gleitkolben (54) einen Stab (56) umfasst, der sich über die erste Kammer (40) erstreckt, und die Bremsgleichgewichtsvorrichtung (38) eine Einstellschraube (72) umfasst, die geeignet ist, um die Vorspannung der Feder (68) zu ändern, um den Wert des hinteren Drucks (Pp) zu ändern, bei dem die Gleichgewichtsvorrichtung eingreifen wird, wobei die Feder (68) zwischen die Einstellschraube (72) und den Stab (56) eingepasst ist.

2. Bremsgleichgewichtsvorrichtung (38) gemäß Anspruch 1, bei der sich die Volumen gegenseitig und umgekehrt ändern können als eine Funktion des Drucks (Pp) der hinteren Schaltung.

3. Bremsgleichgewichtsvorrichtung (38) gemäß Anspruch 1 oder 2, die geeignet ist, um entlang der jeweiligen vorderen und hinteren Schaltung des Bremssystems eingefügt zu werden, wobei der Druck (Pa) der vorderen Schaltung ohne Gleichgewichtsvorrichtung kleiner ist als der Druck (Pp) der hinteren Schaltung, wobei die Gleichgewichtsvorrichtung den vorderen Druck (Pa) in Bezug auf den hinteren Druck (Pp) erhöht, auf den Anstieg bei dem Druck (Pp) der hinteren Schaltung hin.

4. Bremsgleichgewichtsvorrichtung (38) gemäß einem der vorhergehenden Ansprüche, bei dem das Volumen in der zweiten Kammer (42) erhöht wird auf den Anstieg des Drucks (Pp) in der hinteren Schaltung hin, und das Volumen in der ersten Kammer (40) gegenseitig erhöht wird auf den Anstieg des Drucks (Pp) in der hinteren Schaltung hin, womit der Wert des Bremsgleichgewichts während der Bremsaktion geändert wird.

5. Bremsgleichgewichtsvorrichtung (38) gemäß Anspruch 1, bei der die Fläche (A2) des Kolbens (54), die der zweiten Kammer (42) zugewandt ist, größer ist als die Fläche (A1) des Kolbens (54), die der ersten Kammer (40) zugewandt ist.

6. Bremsgleichgewichtsvorrichtung (38) gemäß einem der vorhergehenden Ansprüche, bei der die Einstellschraube (72) ein Aufnahmeelement definiert, das geeignet ist, um die Feder (68) zumindest teilweise darin aufzunehmen, und um extern in einen mit einem Gewinde versehenen Sitz (74) des Zylinders (52) geschraubt zu werden.

7. Bremsgleichgewichtsvorrichtung (38) gemäß Anspruch 6, bei der eine Labyrinthabdichtung vorgesehen ist zwischen dem Kolben (54) und dem Zylinder (52), die Rillen (58) umfasst, die auf der Oberfläche des Kolbens (54) gebildet sind.

8. Bremsgleichgewichtsvorrichtung (38) gemäß einem der vorhergehenden Ansprüche 6 oder 7, die eine Abdichtung umfasst, die mit einem Gummiring (62) und einer Anschlussfläche (64) in einem Material mit niedrigen statischen und dynamischen Reibungswerten versehen ist, die in Kontakt mit einer Wand eines Stabs (56) des Kolbens (54) positioniert ist.

9. Bremsgleichgewichtsvorrichtung (38) gemäß einem der vorhergehenden Ansprüche 6 bis 8, bei der der Kolben einen Vorsprung (82) umfasst, der geeignet ist, um ein niedrigstes Volumen in der zweiten Kammer (42) zu halten.

10. Bremsgleichgewichtsvorrichtung (38) gemäß einem der vorhergehenden Ansprüche 6 bis 9, bei der Kolben eine Schulter (84) umfasst, die geeignet ist, um ein niedrigstes Volumen in der ersten Kammer (40) zu halten.

11. Bremssystem (10) eines Fahrzeugs, das eine Bremsgleichgewichtsvorrichtung (38) zwischen zumindest einer vorderen Schaltung (16) und zumindest einer hinteren Schaltung (18) des Fahrzeugs gemäß einem der vorhergehenden Ansprüche umfasst.

12. Bremssystem (10) eines Fahrzeugs gemäß Anspruch 11, bei dem die erste Kammer (40) entlang der vorderen Schaltung (16) eingefügt ist und die zweite Kammer (42) entlang der hinteren Schaltung (18) eingefügt ist.

13. Bremssystem (10) eines Fahrzeugs gemäß einem der Ansprüche 11 oder 12, bei dem die vordere Schaltung (16) einen vorderen Hauptzylinder (20) umfasst und die hintere Schaltung (18) einen hinteren Hauptzylinder (42) umfasst, wobei die Hauptzylinder mit einem Bremspedal verbunden sind, so dass der Hub (Xp) der jeweiligen Kolben gleich ist.

14. Bremssystem (10) eines Fahrzeugs gemäß Anspruch 13, bei dem die Hauptzylinder (20, 22) jeweilige Stäbe (24, 26) umfassen, die starr mit dem Bremspedal verbunden sind.

15. Bremssystem (10) eines Fahrzeugs gemäß Anspruch 13 oder 14, bei dem der Kolben des vorderen Hauptzylinders (20) eine kleinere Fläche (Aa) aufweist als die Fläche (Ap) des Kolbens des hinteren Hauptzylinders (22).

16. Bremssystem (10) eines Fahrzeugs gemäß einem der Ansprüche 13 bis 15, bei dem der vordere und der hintere Hauptzylinder (20, 22) jeweilige Zylinder (28, 30) umfassen, die an einem Rahmen (32) des Fahrzeugs befestigt sind.

## Revendications

1. Dispositif d'équilibrage (38) des freins destiné à un système de freinage (10) d'un véhicule afin de modifier l'équilibre des freins entre au moins une roue avant et au moins une roue arrière du véhicule, ledit système de freinage (10) comprenant un circuit avant (16) et un circuit arrière (18), et ledit dispositif d'équilibrage (38) comprenant :
- des première et une seconde chambres (40, 42) qui sont respectivement aptes à être interposées le long du circuit avant (16) et du circuit arrière (18) du système de freinage (10), lesdites chambres définissant des volumes qui peuvent varier en fonction de la pression (Pp) du circuit arrière ;
- un cylindre (52) et un piston flottant (54) définissant une paroi mobile desdites première et seconde chambres (40, 42) ; et
- un ressort (68), disposé du côté de la première chambre (40), apte à appliquer une force au piston flottant (54) dirigée de la première vers la seconde chambre ;
**caractérisé en ce que** ledit piston flottant (54) comprend une tige (56) s'étendant à travers la première chambre (40) et **en ce que** ledit dispositif d'équilibrage (38) des freins comporte une vis de réglage (72) qui est apte à modifier le préchargement du ressort (68) pour modifier la valeur de la pression arrière (Pp) à laquelle le dispositif d'équilibrage intervient, ledit ressort (68) étant monté entre la vis de réglage (72) et la tige (56).

2. Dispositif d'équilibrage des freins (38) selon la revendication 1, dans lequel lesdits volumes peuvent varier de façon correspondante et inversement l'un par rapport à l'autre en fonction de la pression (Pp) du circuit arrière.

3. Dispositif d'équilibrage (38) des freins selon la revendication 1 ou 2, apte à être interposé le long de circuits avant et arrière respectifs du système de freinage, la pression (Pa) du circuit avant sans dispositif d'équilibrage étant inférieure à la pression (Pp) du circuit arrière, ledit dispositif d'équilibrage faisant croître la pression avant (Pa) par rapport à la pression arrière (Pp) lors d'une augmentation de la pression (Pp) du circuit arrière.

4. Dispositif d'équilibrage des freins (38) selon l'une des revendications précédentes, dans lequel le volume de la deuxième chambre (42) est augmenté lors d'une augmentation de la pression (Pp) du circuit arrière et dans lequel le volume de la première chambre (40) est amené à décroître de façon correspondante lors d'une augmentation de la pression (Pp) du circuit arrière, faisant ainsi varier la valeur de l'équilibrage des freins pendant l'action de freinage.

5. Dispositif d'équilibrage (38) des freins selon la revendication 1, dans lequel la superficie (A2) du piston (54) faisant face à la seconde chambre (42) est supérieure à la superficie (A1) du piston (54) faisant face à la première chambre (40).

6. Dispositif d'équilibrage (38) des freins selon l'une des revendications précédentes, dans lequel ladite vis d'ajustement (72) définit un réceptacle approprié pour loger le ressort (68) au moins partiellement dans celui-ci et permettant de la visser de l'extérieur dans un siège fileté (74) du cylindre (52).

7. Dispositif d'équilibrage (38) des freins selon la revendication 6, dans lequel un joint à labyrinthe est prévu entre ledit piston (54) et ledit cylindre (52), qui comprend des rainures (58) formées sur la surface du piston (54).

8. Dispositif d'équilibrage (38) des freins selon l'une des revendications 6 ou 7, comprenant un joint doté d'une bague en caoutchouc (62) et d'un patin (64) constitué d'un matériau ayant de faibles valeurs des frottements statique et dynamique, positionné au contact d'une paroi d'une tige (56) du piston (54).

9. Dispositif d'équilibrage (38) des freins selon l'une des revendications 6 à 8 précédentes, dans lequel ledit piston comprend une protubérance (82) apte à maintenir le volume le plus faible dans la seconde chambre (42).

10. Dispositif d'équilibrage (38) des freins selon l'une des revendications 6 à 9 précédentes, dans lequel ledit piston comprend un épaulement (84) apte à maintenir le volume le plus faible dans la première chambre (40).

11. Système de freinage (10) d'un véhicule comprenant un dispositif d'équilibrage (38) des freins entre au moins un circuit avant (16) et au moins un circuit arrière (18) du véhicule selon l'une des revendications précédentes.

12. Système de freinage (10) d'un véhicule selon la revendication 11, dans lequel ladite première chambre (40) est interposée le long dudit circuit avant (16) et ladite seconde chambre (42) est interposée le long dudit circuit arrière (18).

13. Système de freinage (10) d'un véhicule selon la revendication 11 ou 12, dans lequel ledit circuit avant (16) comprend un maître-cylindre avant (20) et ledit circuit arrière (18) comprend un maître-cylindre arrière (22), lesdits maîtres-cylindres étant raccordés à une pédale de frein de façon que les courses (Xp) des pistons respectifs soient identiques.

14. Système de freinage (10) d'un véhicule selon la revendication 13, dans lequel lesdits maîtres-cylindres (20, 22) comprennent des tiges respectives (24, 26) qui sont raccordées de façon rigide à la pédale de frein.

15. Système de freinage (10) d'un véhicule selon les revendications 13 ou 14, dans lequel le piston du maître-cylindre avant (20) a une superficie (Aa) plus faible que la superficie (Ap) du piston du maître cylindre arrière (22).

16. Système de freinage (10) d'un véhicule selon l'une des revendications 13 à 15, dans lequel lesdits maîtres-cylindres avant et arrière (20, 22) comprennent des cylindres respectifs (28, 30) fixés à un châssis (32) du véhicule.
